# EUROPEAN PATENT APPLICATION

(11) **EP 4 748 521 A1**
(43) Date of publication of application: **27.05.2026**
(21) Application number: 24215042.3
(22) Date of filing: 25.11.2024
(51) Int. Cl.: B23B 27/16

(54) **TURNING TOOL**

(71) Applicant: WALTER AG, 72072 Tübingen (DE)
(72) Inventor: SCHUR, Clemens, 72072 Tübingen (DE); SCHWÄGERLE, Rainer, 72072 Tübingen (DE); GAMERDINGER, Benjamin, 72072 Tübingen (DE)
(74) Representative: Sandvik

(57) **Abstract**

The present invention relates to a turning tool for metal cutting comprising a tool body (1) having an insert seat (7) with a seat main support surface (8), a cutting insert (2), a clamping element (3), and a fixation mechanism (10). The clamping element is (3) movably mounted relative the tool body (1) and operable to move to a clamping position, whereby the cutting insert (2) is forced toward the insert seat (7) and, in the clamping position, clamped in the insert seat (7). The fixation mechanism (10) is operable to releasably lock the clamping element (3) in the clamping position. An insert top surface faces (13) the main seat support surface (8), and, when the clamping element (3) is in the clamping position, the clamping element (3) clamps the cutting insert (2) in the insert seat (7) by forcing the insert top surface (13) against the seat main support surface (8).

## Description

### Technical field

The present invention relates to the technical field of metal cutting. Specifically, the present invention relates to a turning tool comprising an insert seat, a cutting insert, and a clamping element for, in a clamping position, clamp the cutting insert in the insert seat.

### Background

WO2019/106661 A1 discloses a turning tool comprising a fastener for securing together a clamp and a tool body for clamping a turning insert in an insert pocket. The fastener extends through a hole in the clamp and into a threaded hole in the tool body. The fastener has a male thread and is screwed into the threaded hole in the tool body for clamping the turning insert under the clamp in the insert pocket. A problem with this known tool is that it can be difficult and time consuming to mount, index or replace a cutting insert in the insert seat where access is limited, for example in a sliding head machine, sometimes also referred to as Swiss-type turning machine.

. In addition, when the turning tool is arranged with the insert pocket extending non-horizontally, it may be difficult to place and hold the cutting insert in the pocket before proper clamping.

### Summary

It is an object of the present invention to at least partly obviate the above-mentioned problems. This object is achieved according to the invention by means of a turning tool as defined in claim 1.

An inventive turning tool for metal cutting comprises
- a tool body having an insert seat at a front end, wherein the insert seat comprises a seat main support surface,
- a cutting insert having
   - an insert top surface,
   - an insert bottom surface,
   - an insert circumferential surface connecting the insert top surface and the insert bottom surface, and
   - a cutting edge at the intersection of the insert top surface and the insert circumferential surface, wherein the cutting insert is received in the insert seat with the cutting edge presented for cutting,
- a clamping element movably mounted relative the tool body and operable to move to a clamping position, whereby the cutting insert is forced toward the insert seat and, in the clamping position, clamped in the insert seat,
- a fixation mechanism operable to releasably lock the clamping element in the clamping position,
   wherein
- the insert top surface faces the main seat support surface, and,
- when the clamping element is in the clamping position, the clamping element clamps the cutting insert in the insert seat by forcing the insert top surface against the seat main support surface.

Thus, a clamping element is arranged to force a top surface of a cutting insert toward an insert seat. In other words, the clamping element is arranged to force the cutting insert upward in a direction opposite to the turning tool disclosed in WO2019/106661 A1. Thereby, advantageously the cutting insert is supported by the clamp also prior to clamping in the insert seat. In addition, the arrangement allows for positioning the fixation mechanism on other sides of the cutting insert than the top side so that access can be optimized.

The turning tool according to the present invention is suitable for metal cutting. Preferably, the turning tool belongs to the kind of metal cutting tools used for metal cutting operations in machines such as computer numerical control machines (CNC machines). Typically, a metal workpiece is rotated, and a cutting edge of the turning tool is moved towards the axis of rotation to cut chips from the rotating workpiece. In an example operation, the turning tool is in addition moved also along other axes, for example along the rotation axis of the workpiece. The turning tool is especially suitable for use in a sliding head machine, sometimes also referred to as Swiss-type turning machine, where access to the turning tool at a top side of a cutting insert is limited.

The turning tool according to the present invention comprises a tool body with an insert seat at a front end, and a cutting insert. Optionally, the insert seat is machined directly in the tool body, or the tool body comprises a shim with the insert seat. The position of the insert seat is defined as being in a forward end of the tool body. Downward and upward directions, and expressions like above and below, are to be understood as directions defined relative top and bottom surfaces, wherein a top surface is to be understood as facing upward, and a bottom surface downward regardless of a global orientation of the cutting tool. Preferably, the tool body extends rearward from the front end and has a top surface, a bottom surface, and lateral surfaces at the sides.

The cutting insert has an insert top surface, an insert bottom surface, an insert circumferential surface connecting the insert top surface and the insert bottom surface. A cutting edge is formed at the intersection of the insert top surface and the insert circumferential surface. The cutting insert is received such that the cutting edge is presented for cutting. According to an embodiment, the cutting insert has further, indexable cutting edges, which are located in non-cutting positions in the insert seat.

The cutting insert is of a material and has a shape that is suitable for metal cutting, specifically chip removing metal cutting. An overall shape of the cutting insert is defined by the top and bottom surfaces, which for example are overall polygonal, round or oval. Examples of polygonal shapes are square, rectangular, and rhombical. Typically, the cutting edge extends around a corner portion of the polygon and along one or both sides away from the corner portion. Preferably, the cutting insert is of a wear resistant material, for example cemented carbide or cermet, and provided with a wear resistant coating, for example deposited by PVD or CVD technique.

The tool body typically is of a less wear resistant material, such as steel.

The insert seat comprises a seat main support surface, which faces the insert top surface, and in the clamping position, the insert top surface is forced against the seat main support surface and preferably contacts the insert seat main support surface. Preferably, areas dedicated for contacting the main insert support surface are portions of the insert top surface. Preferably, the seat main support surface and the insert top surface, or the contact portion of the insert top surface, are parallel.

According to an embodiment, the insert seat further comprises one or more seat side support surfaces, which, at a periphery of the insert seat, extend downward with an angle to the seat main support surface. The side support surfaces face a respective portion of the insert circumferential surface. Preferably, the side support surfaces extend in parallel with a respective portion of the insert circumferential surface, and in the clamping position of the clamping element, is in contact therewith. Thereby the cutting insert can be supported in additional directions in the insert seat, for example in rearward and/or one or more lateral directions.

The turning tool further comprises a clamping element. Optionally, the clamping element is an integral one piece element, or comprised of several parts, wherein for example a top portion of the clamping element constitutes a shim. The clamping element is movable to a clamping position, wherein, in the clamping position, the insert top surface is forced against the seat main support surface. According to an embodiment, the clamping element comprises an element top surface which, in the clamping position, faces and contacts the insert bottom surface, wherein an area of the element top surface is at least 50%, preferably at least 75% of the insert bottom surface. Thereby a large surface is provided on which the cutting insert is able to rest before it is clamped in the insert seat, which facilitates mounting, indexing and exchange. The areas are measured within a periphery of the respective surfaces. According to an embodiment, areas dedicated for contact of the respective surface are smaller than the area within the periphery of the surface, or in other words, portions of the respective surface.

According to a preferred embodiment, the clamping element is a wedge element. Alternatively, the clamping element is a prism element, for example a cuboid element, or a cuboid element provided with flanges. According to an embodiment, the tool body is provided with an opening or slot for receiving the clamping element. For example, the clamping element in form of a cuboid element is slidably received in the slot, or the clamping element in form of a cuboid element with flanges is slidably received in a T-slot.

According to an embodiment wherein the clamping element is a wedge element, the wedge element comprises an element bottom surface, which includes an element guide surface, wherein the element guide surface faces away from and is inclined relative the main seat support surface, and the tool body comprises a body guide surface, which faces and is parallel to the element guide surface wherein, when the wedge element is operated to move toward the clamping position, the element guide surface slides against the body guide surface, whereby a distance from the element top surface to the seat main support surface decreases. According to a preferred embodiment, the inclination angle is 0,5 - 45°, preferably 1 - 9°. A clamping element in form of a such constructed wedge element is a cost efficient solution that does not require tight tolerances. Preferably, the inclination angle is self-locking, whereby additional security is added to the locking of the wedge element in the clamping position.

According to an embodiment, the tool body, at the front end, comprises a top member and a bottom member forming a forwardly open jaw, wherein the insert seat is located in the top member with the seat main support surface facing toward the bottom member. The jaw forms an opening for receiving the wedge element. Preferably, the body guide surface is located on the bottom member and faces toward the top member. The body guide surface is positioned on the bottom member such that, when the insert top surface is forced against the seat main support surface, the element top surface contacts the insert bottom surface when the element guide surface slides on the body guide surface. The provision of the insert seat and the body guide surface on members of an open jaw in the tool body is beneficial for access during machining of these features of the turning tool.

According to an embodiment, the wedge element comprises element side surfaces, which, relative the direction of movement when operated to clamp the cutting insert, extend on one respective side of the element guide surface and connect the element bottom surface with the element top surface, wherein at least one element side surface comprises an element abutment surface, and, the tool body comprises one body abutment surface for each element abutment surface, wherein, in the clamping position, each element abutment surface abuts a respective tool abutment surface. Typically, the body abutment surfaces are arranged on inwardly facing lateral surfaces of the tool body. The wedge element is thus supported in additional direction and preferably in a lateral direction , which contributes to secure clamping of the cutting insert. Optionally, in embodiments with a jaw, there is only one lateral side surface in the jaw, the lateral side surfaces have an extension rearward that differs or is the same. Thus, the size of the tool abutment surface varies between embodiments.

According to an embodiment, outside of the element guide surface, there is a clearance between the element bottom surface and the tool body. Preferably, the bottom surface outside the element guide surface, as seen in a cross section transverse to the direction of movement when operated for clamping, is curved. This reduces the risk of overdetermination of the position of the wedge element in the clamping position.

The turning tool furthermore comprises a fixation element, which is operable to releasably lock the clamping element in the clamping position. The fixation mechanism may be of any suitable kind adapted to lock the clamping element of the embodiment it is arranged in, for example a blocking bar or a locking pin. Optionally, the fixation mechanism constitutes an integral one piece component, or comprises several interacting parts.

According to a preferred embodiment, the fixation mechanism is operable to move clamping element to the clamping position. Thus, the fixation element is operable to both move and lock the clamping element. Alternatively, the turning tool comprises a separate mechanism for moving the clamping element to the clamping position. Preferably, the fixation mechanism is operable to move the clamping element away from the clamping position to a release position, wherein, in the release position, the cutting insert is removable from tool body, and all components of the fixation mechanism and the clamping element are connected with the tool body. Thus, the clamping element is operable to move both to and from the clamping position. This is advantageous in embodiments where the clamping element is held in the clamping position due to self-locking. An example embodiment of a fixation mechanism comprises a fixation screw having a first thread portion with a left-hand thread and a second thread portion with a right-hand thread, wherein one of the first and second thread portions is in engagement with a thread in the clamping element, and the other one of the first and second thread portions is in engagement with a thread in the tool body.

According to a preferred embodiment, the fixation mechanism is operable from the exterior of the tool body in a position which is below the cutting insert, or to a circumferential side of the cutting insert, preferably a circumferential front side at the front end of the tool body. Thereby access in tight spaces or unfavourable orientations of the turning tool can be facilitated. Preferably, the fixation element is operable from several sides, for example from two sides, such as from the front and from a lateral side.

### Brief description of the drawings

In the following, example embodiments will be described in greater detail and with reference to the accompanying drawings, in which:
Fig. 1 is a perspective front view of a turning tool according to a first embodiment of the present invention with a cutting insert clamped in the insert seat;
Fig. 2 is an enlarged view of a front end portion of the turning tool of Fig. 1;
Fig. 3 is a perspective bottom view of the front end portion of the first embodiment of the turning tool with removed cutting insert and clamping element;
Fig. 4 is a perspective bottom view corresponding to Fig. 3;
Fig. 5 is an exploded perspective view of components of the front end portion of the turning tool as shown in Fig. 2;
Fig. 6 is perspective bottom view of a clamping element in form of a wedge element according to the first embodiment of the turning tool;
Fig. 7 is a longitudinal section along a longitudinal center axis of the fixation mechanism in form of a fixation screw of the front end portion of the turning tool according to the first embodiment;
Fig. 8 is an enlarged front end view turning tool according to a first embodiment;
Fig. 9 is a schematic side view of a turning tool according to a second embodiment of the present invention; and
Fig. 10 is a schematic bottom view of the turning tool according to the second embodiment.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

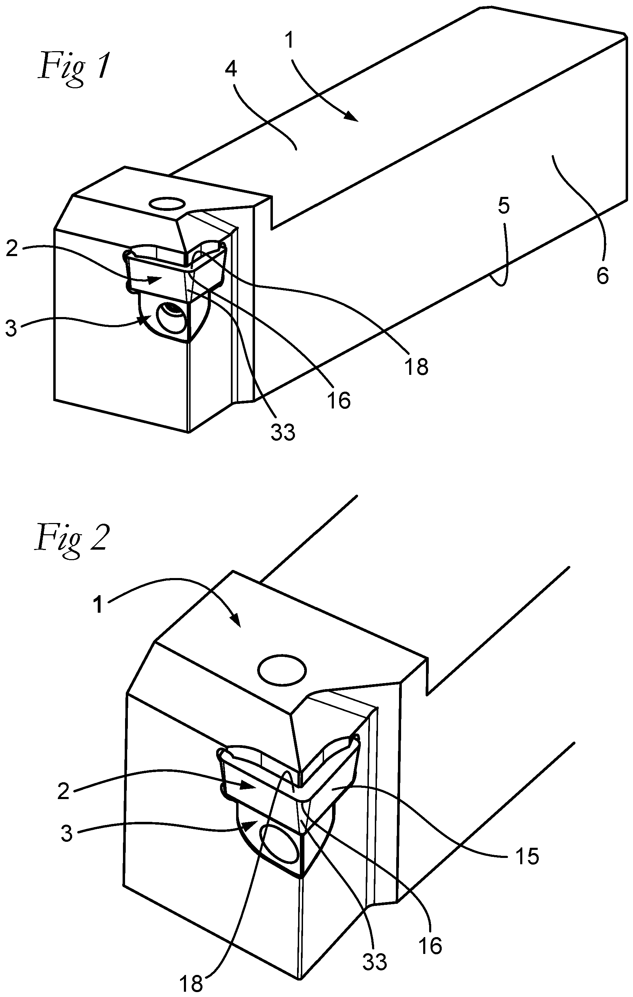

With reference to Figs. 1- 8, a first embodiment of a turning tool for metal cutting according to the present invention is described. The turning tool comprises a tool body 1, which comprises a head portion and a shaft portion. In other embodiments, the tool body 1 comprises a head potion only. The turning tool 1 is attachable to a CNC machine (not shown) by means of the shaft portion.

The tool body 1 comprises an insert seat 7 at a front end. The turning tool further comprises a cutting insert 2 received in the insert seat 7; a clamping element 3, which is movably mounted relative the tool body 1 and operable to move to a clamping position for clamping the cutting insert 2 in the insert seat 7; and a fixation mechanism 10 for, in the clamping position, releasably lock the clamping element 3.

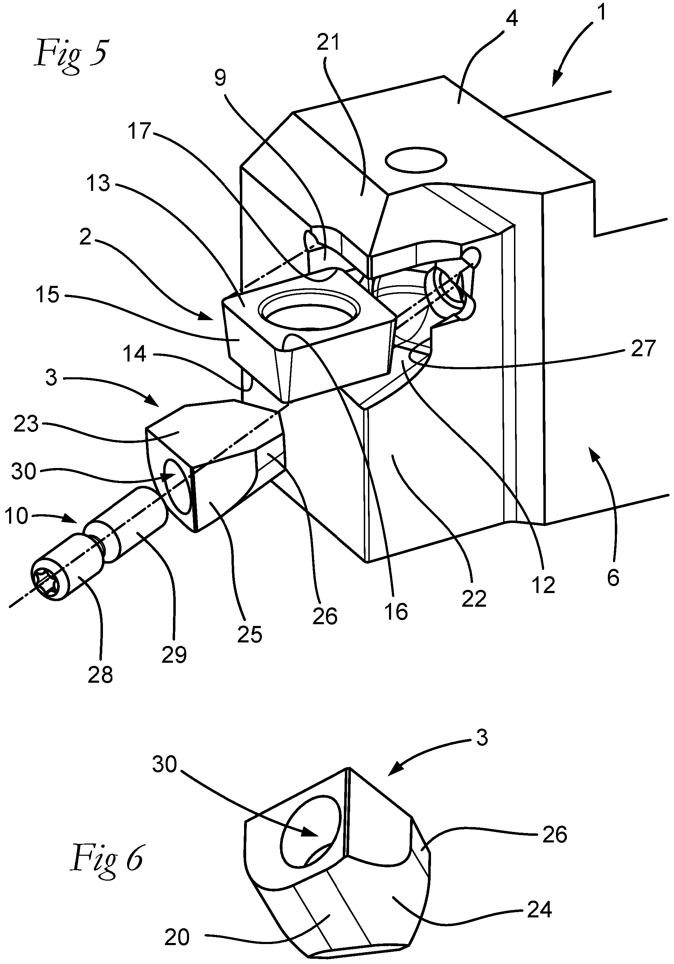

The cutting insert 2 has an insert top surface 13, an insert bottom surface 14, an insert circumferential surface 15 connecting the insert top surface 13 and the insert bottom surface 14, c.f. Fig. 5. As seen in a top view, the insert top surface 13 has a rhombical overall shape, which defines the overall shape of the cutting insert 2. The rhombical top surface 13 has two obtuse and two acute angles. The cutting insert 2 is made from cemented carbide and provided with a wear resistant coating.

A cutting edge 16 is formed at the intersection of the insert top surface 13 and the insert circumferential surface 15. When the cutting insert 2 is received in the insert seat 7 and clamped therein by means of the clamping element being in the clamping position, the cutting edge 16 is presented for cutting. Therein, the cutting edge 16 protrudes from the tool body 1 and is ready to be fed toward and/or along a rotating workpiece in order to remove material therefrom, for example by cutting chips. In the described first example embodiment, the cutting insert 2 also has an indexable cutting edge 17 which is located in a non-cutting position in the insert seat 2. As seen in a top view, the cutting edge 16 and the indexable cutting edge 17 both extend around a respective one of the two acute angles of the rhombical top surface 13. The top surface 13 comprises rake surfaces 18, which extend along one respective cutting edge 16 and indexable cutting edge 17, c.f. Figs. 1 and 2. In other not shown embodiments, the rake surface 18 comprises chip breaking features such as a groove and/or a protrusion. Correspondingly, the insert circumferential surface 15 comprises clearance surface 33, which extend along one respective cutting edge 16 and indexable cutting edge 17.

The tool body 1 has a body top surface 4, a body bottom surface 5, and a body circumferential surface, which connects the body top surface 4 and the body bottom surface 5. The body circumferential surface includes two lateral surfaces 6. At a front end, the tool body 1 has a top member 21 and a bottom member 22 together forming a forwardly open jaw.

The insert seat 7 is machined directly the top member 21 of the tool body 1, and specifically inside the jaw. The insert seat has a seat main support surface 8, which faces the insert top surface 13 and toward the bottom member 22. When the cutting insert 2 is clamped in the insert seat 7, the insert top surface 13 contacts the seat main support surface 8.

The insert seat 7 comprises two seat side support surfaces 9, which, at one respective side of the seat main support surface 8, extends downward toward the bottom member 22 at a 90° angle. Rearward, away from the front end of the tool body 1, the seat side support surfaces 9 meet at a curved seat corner portion 11 of the insert seat 7. The insert seat 7 has grooves 19 extending along one respective seat side support surface for providing clearance for edges of the cutting insert 2. The curved seat corner portion 11 provides clearance for the indexable cutting edge 17.

A body bore 31 extends rearward in the tool body 1 from an opening at the curved seat corner portion 11 in the insert seat 7. The body bore 31 is provided with a right-hand thread. In other not shown embodiments, the body bore 31 is a through bore and extends rearward to an opening in one of the tool lateral side surfaces 6.

The tool body 1 comprises a body guide surface 12, which, inside the jaw, is machined directly in the bottom member 22. The body guide surface 12 extends from the front end of the tool body 1 rearward toward the seat corner portion 11. The body guide surface 12 faces the seat main support surface 8 in the top member 21, wherein at most a minority of the of the guide surface 12 extends further forward than the seat main support surface 8. The body guide surface 12 is planar and inclined such that distance to the seat main support surface 8 decreases rearward closer to the seat corner portion 11.

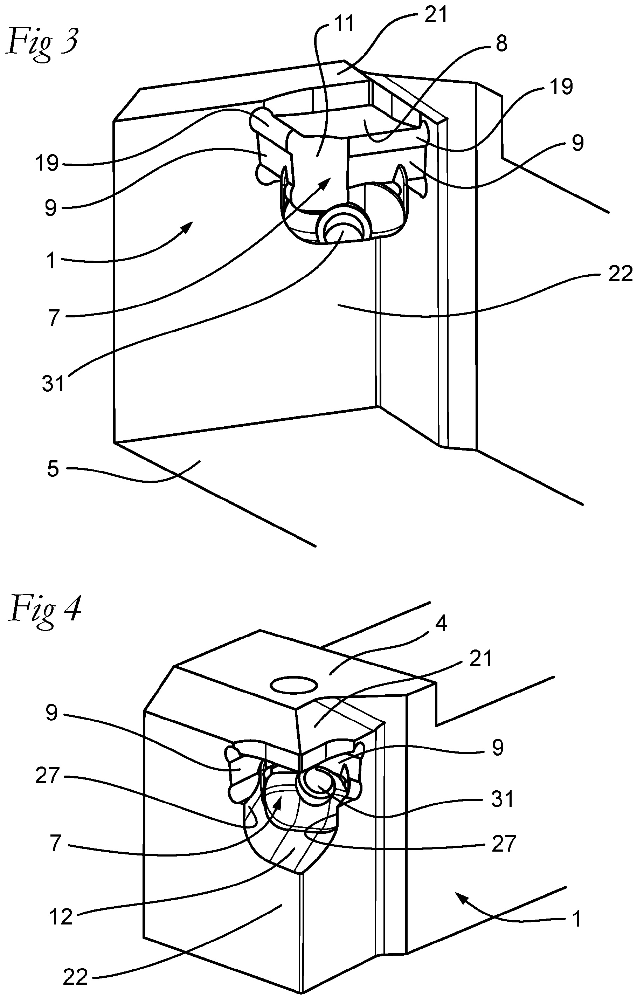

The tool body 1 comprises two body abutment surfaces 27 located inside the jaw between the top member 21 and the bottom member 22, c.f. Fig. 4. The body abutment surfaces 27 face inward into the jaw and extend rearward form the front end. The body abutment surfaces 27 are planar.

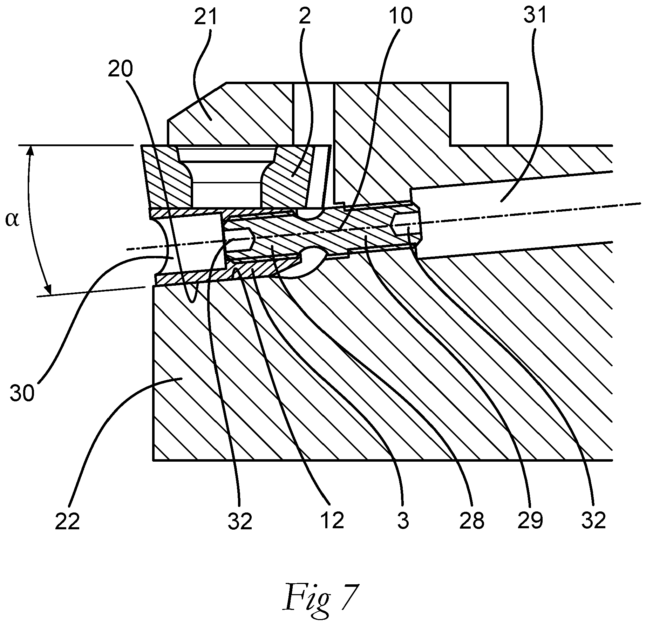

According to the first embodiment, the clamping element 3 is an integral one piece element in form of a wedge element 3. The wedge element 3 comprises an element bottom surface 24, which includes an element guide surface 20. The jaw forms an opening for receiving the wedge element 3 between the top member 21 and the bottom member 22. In the clamping position, the element guide surface 20 faces and contacts the body guide surface 12 in the bottom member 22, wherein the element guide surface 20 is inclined and parallel with the body guide surface 12. An inclination angle α relative the seat main support surface 8 of both the body guide surface 12 and the element guide surface 20 is 5°, c.f. Fig. 7. This angle is self-locking for a wedge element 3 and a tool body 1 made from steel.

The wedge element 3 further comprises an element top surface 23, which, in the clamping position, faces and contacts the insert bottom surface 14. The element guide surface 20 and the element top surface 23 form the wedge surfaces of the wedge element 3.

The wedge element 3 further comprises element side surfaces 25, which, on a respective side of the wedge element 3, connect the element bottom surface 24 with the element top surface 23. In the described first embodiment, both side surfaces 25 comprise an element abutment surface 26, which extend rearward from the front end. In the clamping position, both element abutment surfaces 26 faces and abuts against one respective body abutment surface 27.

As seen in a cross section, the element bottom surface 24 is curved from the element guide surface 20 to the element abutment surface 26. The radius R1 of curvature in the described first embodiment is 3mm.

The wedge element has an element bore 30 extending from an opening in the front end of the wedge element 3 rearward along and above the element guide surface 20, which element bore 30 is provided with left-hand thread. The element bore 30 and the body bore 31 are aligned and both have the same inclination angle α of 5° as the element guide surface 20.

The fixation mechanism 10 in form of a fixation screw 10 has a first thread portion 28 with a left-hand thread and a second thread portion 29 with a right-hand thread. The first thread portion 28 is in engagement with the left-hand thread in the element bore 30, and the second thread portion 29 is in engagement with the right-hand thread of the body bore 31. The fixation screw 10, in both ends thereof, has a head with a slot 32 for enabling rotation of the fixation screw 10 with an Allen key. A central longitudinal axis of the fixation screw 10 coincides with a common central longitudinal axis of the aligned bores 30, 31.

When a cutting insert 2 is to be clamped in the insert seat 7, the cutting insert is inserted through the opening of the jaw and placed underneath the insert seat with the insert bottom surface 14 contacting the element top surface 23 of the wedge element 3. The insert bottom surface 14 is larger than the element top surface 23 and protrudes from the element top surface 23, wherein the element top surface 23 is 82% of the insert bottom surface 14. Thereby, the cutting insert is able to rest with good balance on top of the wedge element 3.

The wedge element 3 is movable relative the tool body 1 rearward into the jaw to a clamping position, and forward toward the opening of the jaw to a release position.

The fixation screw 10 is rotatable by inserting an Allen key in one of the slots 32 and rotating the Allen key. Both slots 32 are located at the exterior of the tool body 1, wherein the fixation screw is accessible from both the front end and from the lateral surface 6. Thanks to the engaging threads, the fixation screw 10 pulls the wedge element 3 rearward into the jaw when operated to rotate in first a direction. The wedge element 3 is caused to move in a clamping direction, wherein the element guide surface 20 slides against the tool guide surface 12. During the sliding movement, the distance from the element top surface 23 to the seat main support surface 8 decreases. Thereby, the cutting insert 2, which is carried by the wedge element 3 resting on the element top surface 23, is pushed upward until the insert top surface 13 contacts and is forced against the seat main support surface 8. When, thanks to exerted force, the cutting insert 2 is clamped against the seat main support surface 8 in the insert seat 7, the wedge element 3 has reached the clamping position.

In the clamping position, portions of the insert circumferential surface 15 contact and abut against the seat side support surfaces 9, whereby the cutting insert 2 is supported in lateral directions. The edges of the cutting insert 2 are located in the grooves 19, and the indexable cutting edge 17 in the curved seat corner portion 11, whereby they have clearance to the tool body 1. The cutting edge 16 protrudes from the tool body 1 and is presented for cutting.

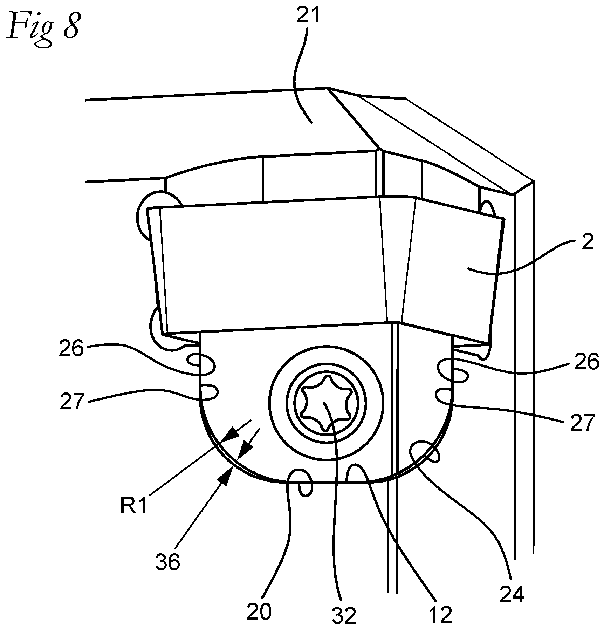

In the clamping position, the element abutment surfaces 26 contact one respective body abutment surface 27, whereby the wedge element is supported in lateral directions. However, there is a clearance 36 between the curved portions of the element bottom surface 24 and the bottom member 22 of the tool body 1 such that the wedge element 3 only is in contact with the tool body 1 with the element guide surface 20 and the element abutment surfaces 26, c.f. Fig 8 where a clearance 36 can be seen. Thereby, jamming of the wedge element in the clamping position is avoided.

Thanks to friction between contacting surfaces 13, 8; 23, 14; and 20,12, the fixation screw 10 locks the wedge element 3 in the then reached clamping position, and the cutting insert 2 is securely clamped in the insert seat 7.

When the cutting insert is to be removed from the insert seat 7 for indexing or replacement, the Allen key is inserted into one of the slots 32 in one of the heads of the fixation screw 10 and rotated in a second direction opposite to the first direction. Thanks to the engaging threads, the fixation screw 10 pulls the wedge element 3 forward toward the opening of the jaw, wherein the fixation screw 10 overcomes self-locking forces. The wedge element 3 is caused to move in a direction opposite to the clamping direction, wherein the element guide surface 20 slides against the tool guide surface 12. During the sliding movement, the distance from the element top surface 23 to the seat main support surface 8 increases. Thereby, the cutting insert 2, which is carried by the wedge element 3 resting on the element top surface 23, is lowered away the seat main support surface 8 until there is sufficient space to remove the cutting insert 2 from the insert seat 7. Then the wedge element 3 has reached the release position. In the release position, the thread first and second thread portions 28, 29 of the fixation screw 10 still are in engagement with corresponding threads in the element bore 30 and the body 31 such that both the wedge element 3 and the fixation screw are connected with the tool body also in the release position.

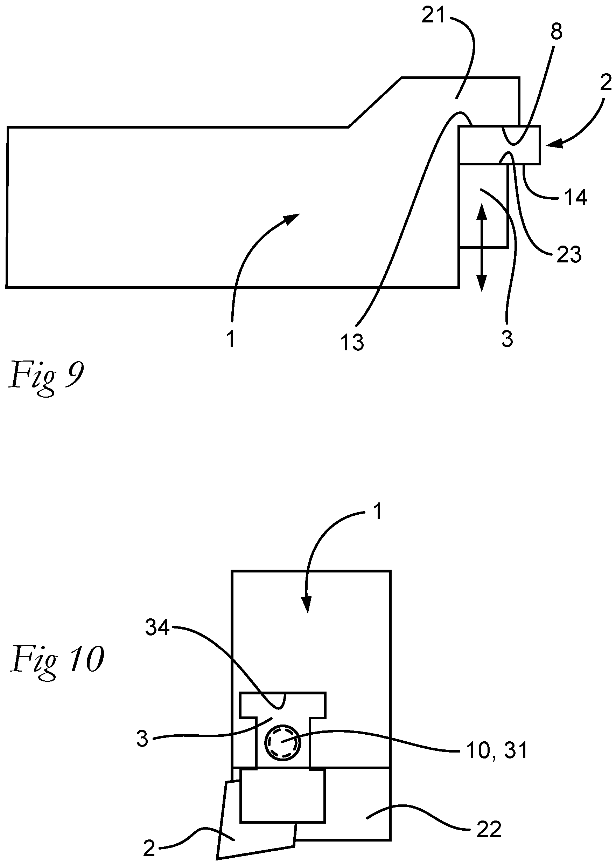

In Figs. 9 and 10, schematic views of a second embodiment of turning tool according to the present invention is shown. The second embodiment differs from the first embodiment mainly by the design clamping element 3 and related features. Therefore, the description of the second embodiment is in less detail and focused on differencing features.

At the front end, the tool body 1 of the second embodiment has a forwardly protruding top member 21 but lacks the bottom member of the first embodiment. The insert seat 7 is machined directly in the top member 21 and has surfaces corresponding to the insert seat 7 of the first embodiment, which include the seat main support surface 8.

Rearward of the top member, the tool body 1 is provided with a T-slot 34. The standing bar slot and the cross bar slot of the T-slot 34 extend upward into the tool body 1 from a T-shaped opening in the bottom surface 5 of the tool boy 1. The standing bar slot is a forwardly open slot.

The body bore 31 of the second embodiment extends from an opening at the seat main support surface 8 upward into the top member 21.

The clamping element 3 is in form of a cuboid element with flanges. The clamping element 3 is slidably received in the T-slot 34, wherein the flanges are located in the cross bar slot. A main body of the clamping element 3 is located in the standing bar slot and protrudes through the forward opening therefrom. Thereby, the top surface 23 of the clamping element 3 is aligned with and faces the seat main support surface 8. The element bore 30 extends from an opening in the element bottom surface 24 to an opening in the element top surface 23 and is aligned with body bore 31.

The second embodiment has a fixation mechanism 10 in form of a fixation screw 10 of the same kind as the first embodiment and the read portions 28, 29 are in engagement with the threads of the bores 30, 31 in a corresponding way.

When a cutting insert is to be clamped in the insert 7, it is placed with the insert bottom surface 14 against the element top surface 23, and the fixation screw is rotated. Thereby the clamping element is pulled upward in the T-slot 34 forcing the insert top surface 13 against the seat main support surface 8. The cutting insert is released by rotating the fixation screw in the opposite direction. The slot 32 of the head of the fixation screw is located at the exterior of the tool body in a position which is below the cutting insert 2.

## Claims

1. A turning tool for metal cutting comprising
- a tool body (1) having an insert seat (7) at a front end, wherein the insert seat (7) comprises a seat main support surface (8),
- a cutting insert (2) having
- an insert top surface (13),
- an insert bottom surface (14),
- an insert circumferential surface (15) connecting the insert top surface (13) and the insert bottom surface (14), and
- a cutting edge (16) at the intersection of the insert top surface (13) and the insert circumferential surface (15), wherein the cutting insert (2) is received in the insert seat (7) with the cutting edge (16) presented for cutting,
- a clamping element (3) movably mounted relative the tool body (1) and operable to move to a clamping position, whereby the cutting insert (2) is forced toward the insert seat (7) and, in the clamping position, clamped in the insert seat (7),
- a fixation mechanism (10) operable to releasably lock the clamping element (3) in the clamping position,
**characterized in that,**
- the insert top surface (13) faces the main seat support surface (8), and,
- when the clamping element (3) is in the clamping position, the clamping element (3) clamps the cutting insert (2) in the insert seat (7) by forcing the insert top surface (13) against the seat main support surface (8).

2. The turning tool according to claim 1, wherein the clamping element (3) comprises an element top surface (23) which, in the clamping position, faces and contacts the insert bottom surface (14), wherein an area of the element top surface (23) is at least 50%, preferably at least 75% of the insert bottom surface (14).

3. The turning tool according to claim 1 or 2, wherein the clamping element (3) is a wedge element (3).

4. The turning tool according to claim 3, wherein
- the wedge element (3) comprises an element bottom surface (24), which includes an element guide surface (20), wherein the element guide surface (20) faces away from and is inclined relative the main seat support surface (8),
- the tool body comprises a body guide surface (12), which faces and is parallel to the element guide surface (20) wherein, when the wedge element (3) is operated to move toward the clamping position, the element guide surface (20) slides against the body guide surface (12), whereby a distance from the element top surface (23) to the seat main support surface (8) decreases.

5. The turning tool according to claim 4, wherein the inclination angle α is 0,5 - 45°, preferably 1 - 9°.

6. The turning tool according to claim 5, wherein the inclination angle α is self-locking.

7. The turning tool according to any claim 4 - 6, wherein the tool body (1), at the front end, comprises a top member (21) and a bottom member (22) forming a forwardly open jaw, wherein the insert seat (7) is located in the top member (21) with the seat main support surface (8) facing toward the bottom member (22).

8. The turning tool according to claim 7, wherein the body guide surface (12) is located on the bottom member (22) and faces toward the top member (21).

9. The turning tool according to any claim 4 - 8, wherein
- the wedge element (3) comprises element side surfaces (25), which, relative the direction of movement when operated to clamp the cutting insert (2), extend on a respective side of the element guide surface (20) and connect the element bottom surface (24) with the element top surface (23), wherein at least one element side surface (24) comprises an element abutment surface (26),
- the tool body comprises one body abutment surface (27) for each element abutment surface (26), wherein, in the clamping position, each element abutment surface (26) abuts a respective body abutment surface (27).

10. The turning tool according to any claim 4 - 9, wherein, outside of the element guide surface (20), there is a clearance (36) between the element bottom surface (24) and the tool body (1).

11. The turning tool according to any claim 4 - 10, wherein the element bottom surface (24) outside the element guide surface (20), as seen in a cross section transverse to the direction of movement when operated for clamping, is curved.

12. The turning tool according to any preceding claim, wherein the fixation mechanism (10) is operable to move clamping element (3) to the clamping position.

13. The turning tool according to claim 12, wherein the fixation mechanism (10) is operable from the exterior of the tool body (1) in a position which is
- below the cutting insert (2), or
- to a circumferential side of the cutting insert (2), preferably a circumferential front side at the front end of the tool body (1).

14. The turning tool according to claim 12 or 13, wherein the fixation mechanism (10) is operable to move the clamping element (3) away from the clamping position to a release position, wherein, in the release position,
- the cutting insert (2) is removable from tool body (1), and
- all components of the fixation mechanism (10) and the clamping element (3) are connected with the tool body (1).

15. The turning tool according to any claim 12 - 14, wherein the fixation mechanism (10) comprises a fixation screw (10) having a first thread portion (28) with a left-hand thread and a second thread portion (29) with a right-hand thread, wherein one of the first and second thread portions (28, 29) is in engagement with a thread in the clamping element (3), and the other one of the first and second thread portions is in engagement with a thread in the tool body (1).
